# EUROPEAN PATENT APPLICATION

(11) **EP 4 651 607 A1**
(43) Date of publication of application: **19.11.2025**
(21) Application number: 24744163.7
(22) Date of filing: 11.01.2024
(51) Int. Cl.: H04W 72/53

(54) **COMMUNICATION METHOD AND APPARATUS**

(30) Priority: 20.01.2023 CN 202310104710
(71) Applicant: Huawei Technologies Co., Ltd., Shenzhen, Guangdong 518129 (CN)
(72) Inventor: ZHANG, Yangyang, Shenzhen, Guangdong 518129 (CN); YU, Zheng, Shenzhen, Guangdong 518129 (CN); XU, Rui, Shenzhen, Guangdong 518129 (CN); ZHANG, Yanqing, Shenzhen, Guangdong 518129 (CN)
(74) Representative: Epping - Hermann - Fischer
(86) International application number: PCT/CN2024/071856
(87) International publication number: WO 2024/152987

(57) **Abstract**

A communication method and apparatus are provided, which relate to the field of communication technologies, so that when an access network device configures an uplink resource for a terminal device, a waste of uplink resources can be reduced, and a network capacity can be improved. The method includes: sending first indication information to an access network device; receiving second indication information from the access network device; and sending data to the access network device by using a third resource. The first indication information indicates a first resource not used by a terminal device, the first resource is a part or all of a second resource, and the second resource is a resource configured by the access network device for the terminal device. The second indication information indicates that the access network device reschedules a part or all of the first resource, or the second indication information indicates that the access network device does not reschedule a part or reschedules none of the first resource. The third resource is related to the part or all of the first resource indicated by the second indication information, and the third resource is a part or all of the second resource.

## Description

This application claims priority to Chinese Patent Application No. 202310104710.8, filed with the China National Intellectual Property Administration on January 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, an access network device may configure an uplink resource for a terminal device in an uplink configured grant (configured grant, CG) manner, and the terminal device may implement uplink data transmission based on the configured uplink resource.

The uplink CG manner means that in an uplink transmission process, the access network device allocates the uplink resource to the terminal device once by using radio resource control layer (radio resource control, RRC) signaling or a physical downlink control channel (physical downlink control channel, PDCCH), and then the terminal device may perform uplink transmission by periodically and repeatedly using a same time-frequency resource, to implement periodic uplink service transmission.

However, a size of the uplink resource configured by the access network device for the terminal device is fixed, and cannot flexibly match service data whose size is dynamically variable on the terminal device side. When a large quantity of uplink resources are configured by the access network device for the terminal device, a waste of uplink resources is caused, and a network capacity is affected.

### SUMMARY

Embodiments of this application provide a communication method and apparatus, so that when an access network device configures an uplink resource for a terminal device, a waste of uplink resources can be reduced, and a network capacity can be improved.

According to a first aspect, an embodiment of this application provides a communication method. The method may be performed by a terminal device, or may be performed by a chip used in the terminal device. The following uses an example in which the method is performed by the terminal device for description. The method may include: sending first indication information to an access network device; receiving second indication information from the access network device; and sending data to the access network device by using a third resource. The first indication information indicates a first resource not used by the terminal device, the first resource is a part or all of a second resource, and the second resource is a resource configured by the access network device for the terminal device. The second indication information indicates that the access network device reschedules a part or all of the first resource, or the second indication information indicates that the access network device does not reschedule a part or reschedules none of the first resource. The third resource is related to the part or all of the first resource indicated by the second indication information, and the third resource is a part or all of the second resource.

Based on the first aspect, after indicating, to the access network device, the first resource not used by the terminal device, the terminal device may send, when receiving the second indication information, the data to the access network device by using the third resource. This adds an interaction process between the access network device and the terminal device, so that the access network device and the terminal device align cognition of the unused resource reported by the terminal device, and a waste of resources is avoided.

In a possible design, the second indication information indicates that the access network device reschedules all of the first resource, and the third resource is a resource that is in the second resource and that is other than the first resource. Alternatively, the second indication information indicates that the access network device reschedules the part of the first resource, and the third resource is a resource that is in the second resource and that is other than the part of the first resource rescheduled by the access network device. Alternatively, the second indication information indicates that the access network device reschedules none of the first resource, and the third resource is the second resource. Alternatively, the second indication information indicates that the access network device does not reschedule the part of the first resource, and the third resource is a resource that is in the second resource and that is other than a part of the first resource rescheduled by the access network device.

Based on the possible design, the terminal device may determine the third resource depending on whether the access network device reschedules the part or all of the first resource, to avoid the waste of resources and provide a plurality of feasible solutions for determining the third resource.

In a possible design, the second indication information indicates that the access network device reschedules the part of the first resource, and the terminal device updates a modulation and coding scheme MCS, and remaps the third resource according to an updated MCS. Alternatively, the second indication information indicates that the access network device does not reschedule the part or reschedules none of the first resource, and the terminal device updates an MCS, and remaps the third resource according to an updated MCS.

Based on the possible design, the terminal device may remap the third resource according to the updated MCS, to avoid the waste of resources.

In a possible design, before the data is sent to the access network device by using the third resource, the method further includes: receiving third indication information from the access network device, where the third indication information indicates the terminal device to update the MCS, or the third indication information indicates the terminal device not to update the MCS; or determining, based on the second indication information, to update or not to update the MCS. Based on the possible design, the terminal device may determine, based on the indication information of the access network device, whether to update the MCS, or may autonomously determine whether to update the MCS. This is not limited.

In a possible design, a value of the updated MCS is related to a quantity of resources included in the third resource. Based on the possible design, a larger quantity of resources included in the third resource indicates that a smaller value of the MCS may be used to remap the third resource, and that a lower data rate may be used to remap the resource, so that transmission stability is improved.

In a possible design, if an end moment of the first resource is after a first moment, the first indication information is sent to the access network device, where the end moment of the first resource is greater than a first threshold, and a value of the first threshold is S or N, where a value of S is any one of the following, and a value of N is a sum of a plurality of the following: from end time of sending the first indication information by the terminal device to end time of obtaining the first indication information by the access network device through decoding; or from end time of obtaining the first indication information by the access network device through decoding to end time of sending the second indication information by the access network device; or from end time of sending the second indication information by the access network device to end time of receiving the second indication information by the terminal device; or from end time of receiving the second indication information by the terminal device to end time of sending the data by the terminal device; or from end time of sending downlink control information by the access network device to another terminal device to end time of sending data by the another terminal device.

Based on the possible design, if the terminal device determines, through evaluation based on a channel parameter setting, that the end moment of the first resource is less than or equal to the first threshold, because processing time is long, after both the access network device and the terminal device complete processing of some signaling or information, the first resource not used by the terminal device may be already missed and cannot be allocated to another terminal device for use. In this case, the terminal device may not report the first indication information. If the terminal device determines, through evaluation based on a channel parameter setting, that the end moment of the first resource is greater than the first threshold, after the access network device and the terminal device process signaling or information, a part of the first resource not used by the terminal device is still valid, and the partial valid resource may be used by another terminal device. In this case, the terminal device may report the first indication information. In a possible design, fourth indication information is received from the access network device, where the fourth indication information indicates the first threshold.

Based on the possible design, the access network device sends time information of the processing time to the terminal device, to help determine whether a network can obtain a benefit from the first resource not used by the terminal device. In addition, this helps the terminal device select, based on the processing time indicated by the access network device, an appropriate MCS or coding and modulation mode to maximize or optimize resource utilization, to improve a resource utilization rate. The access network device specifies the processing time. This helps perform a subsequent proper procedure and improve a network capacity.

In a possible design, the first resource is a consecutive resource, and the first indication information is sent to the access network device once in one CG period, where a sending moment of the first indication information is a 1^{st} symbol for sending a PUSCH in one CG period; or an offset between a sending moment of the first indication information and a 1^{st} symbol for sending a PUSCH in one CG period is a preset offset.

In a possible design, the first resource is a discrete resource, and the first indication information is sent to the access network device once in one CG period, where a sending moment of the first indication information is a 1^{st} symbol for sending a PUSCH in one CG period; or an offset between a sending moment of the first indication information and a 1^{st} symbol for sending a PUSCH in one CG period is a preset offset

In a possible design, the first resource is a discrete resource, and the first indication information is sent to the access network device for a plurality of times in one CG period, where the first resource includes N parts, and a sending moment of the first indication information is a 1^{st} symbol that is for sending a PUSCH and that is before an n^{th} part of the first resource in one CG period; or an offset between a sending moment of the first indication information and a 1^{st} symbol that is for sending a PUSCH and that is before an n^{th} part of the first resource in one CG period is a preset offset, where N≥2, and N≥n≥1.

Based on the foregoing three possible designs, the terminal device may send the first indication information at different positions, so that resource configuration is more flexible. Different configuration manners may be used in different requirement scenarios. For example, in a scenario with a high latency requirement, the first indication information may be sent for a plurality of times.

In a possible design, fifth indication information is sent to another terminal device, where the fifth indication information indicates one or more of the another terminal device to perform data transmission by using the first resource.

Based on the possible design, because the access network device or the terminal device takes long time to process the signaling or the information, if a small quantity of resources are not used by the terminal device, and do not remain valid after the access network device or the terminal device processes the signaling or the information, the resources cannot be reused through an air interface. For this type of resource, the terminal device may send the fifth indication information to the another terminal device, to improve the resource utilization rate.

According to a second aspect, an embodiment of this application provides a communication method. The method may be performed by an access network device, or may be performed by a chip used in the access network device. The following uses an example in which the method is performed by the access network device for description. The method may include: receiving first indication information from a terminal device; sending second indication information to the terminal device; and receiving data from the terminal device by using a third resource. The first indication information indicates a first resource not used by the terminal device, the first resource is a part or all of a second resource, and the second resource is a resource configured by the access network device for the terminal device. The second indication information indicates that the access network device reschedules a part or all of the first resource, or the second indication information indicates that the access network device does not reschedule a part or reschedules none of the first resource. The third resource is related to the part or all of the first resource indicated by the second indication information, and the third resource is a part or all of the second resource.

Based on the second aspect, after indicating, to the access network device, the first resource not used by the terminal device, the terminal device may send, when receiving the second indication information, the data to the access network device by using the third resource. This adds an interaction process between the access network device and the terminal device, so that the access network device and the terminal device align cognition of the unused resource reported by the terminal device, and a waste of resources is avoided.

In a possible design, the second indication information indicates that the access network device reschedules all of the first resource, and the third resource is a resource that is in the second resource and that is other than the first resource. Alternatively, the second indication information indicates that the access network device reschedules the part of the first resource, and the third resource is a resource that is in the second resource and that is other than the part of the first resource rescheduled by the access network device. Alternatively, the second indication information indicates that the access network device reschedules none of the first resource, and the third resource is the second resource. Alternatively, the second indication information indicates that the access network device does not reschedule the part of the first resource, and the third resource is a resource that is in the second resource and that is other than a part of the first resource rescheduled by the access network device.

Based on the possible design, the terminal device may determine the third resource depending on whether the access network device reschedules the part or all of the first resource, to avoid the waste of resources and provide a plurality of feasible solutions for determining the third resource.

In a possible design, before the data is received from the terminal device by using the third resource, the method further includes: sending third indication information to the terminal device, where the third indication information indicates the terminal device to update a modulation and coding scheme MCS, or the third indication information indicates the terminal device not to update an MCS.

Based on the possible design, the terminal device may determine, based on the indication information of the access network device, whether to update the MCS.

In a possible design, a value of the updated MCS is related to a quantity of resources included in the third resource.

Based on the possible design, a larger quantity of resources included in the third resource indicates that a smaller value of the MCS may be used to remap the third resource, and that a lower data rate may be used to remap the resource, so that transmission stability is improved.

In a possible design, fourth indication information is sent to the terminal device, where the fourth indication information indicates a first threshold, and a value of the first threshold is S or N, where a value of S is any one of the following, and a value of N is a sum of a plurality of the following: from end time of sending the first indication information by the terminal device to end time of obtaining the first indication information by the access network device through decoding; or from end time of obtaining the first indication information by the access network device through decoding to end time of sending the second indication information by the access network device; or from end time of sending the second indication information by the access network device to end time of receiving the second indication information by the terminal device; or from end time of receiving the second indication information by the terminal device to end time of sending the data by the terminal device; or from end time of sending downlink control information by the access network device to another terminal device to end time of sending data by the another terminal device.

Based on the possible design, the access network device sends time information of processing time to the terminal device, to help determine whether a network can obtain a benefit from the first resource not used by the terminal device. In addition, this helps the terminal device select, based on the processing time indicated by the access network device, an appropriate MCS or coding and modulation mode to maximize or optimize resource utilization, to improve a resource utilization rate. The access network device specifies the processing time. This helps perform a subsequent proper procedure and improve a network capacity.

In a possible design, the first resource is a consecutive resource, and the first indication information is received from the terminal device once in one CG period, where a sending moment of the first indication information is a 1^{st} symbol for sending a PUSCH in one CG period; or an offset between a sending moment of the first indication information and a 1^{st} symbol for sending a PUSCH in one CG period is a preset offset.

In a possible design, the first resource is a discrete resource, and the first indication information is received from the terminal device once in one CG period, where a sending moment of the first indication information is a 1^{st} symbol for sending a PUSCH in one CG period; or an offset between a sending moment of the first indication information and a 1^{st} symbol for sending a PUSCH in one CG period is a preset offset.

In a possible design, the first resource is a discrete resource, and the first indication information is received from the terminal device for a plurality of times in one CG period, where the first resource includes N parts, and a sending moment of the first indication information is a 1^{st} symbol that is for sending a PUSCH and that is before an n^{th} part of the first resource in one CG period; or an offset between a sending moment of the first indication information and a 1^{st} symbol that is for sending a PUSCH and that is before an n^{th} part of the first resource in one CG period is a preset offset, where N≥2, and N≥n≥1.

Based on the foregoing three possible designs, the terminal device may send the first indication information at different positions, so that resource configuration is more flexible. Different configuration manners may be used in different requirement scenarios. For example, in a scenario with a high latency requirement, the first indication information may be sent for a plurality of times.

According to a third aspect, a communication apparatus is provided. For beneficial effects, refer to descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes a transceiver module, configured to send first indication information to an access network device, where the first indication information indicates a first resource not used by a terminal device, the first resource is a part or all of a second resource, and the second resource is a resource configured by the access network device for the terminal device. The transceiver module is further configured to receive second indication information from the access network device, where the second indication information indicates that the access network device reschedules a part or all of the first resource, or the second indication information indicates that the access network device does not reschedule a part or reschedules none of the first resource. The transceiver module is further configured to send data to the access network device by using a third resource, where the third resource is related to the part or all of the first resource indicated by the second indication information, and the third resource is a part or all of the second resource. These modules may perform corresponding functions in the method example in the first aspect. For details, refer to detailed descriptions in the method example. Details are not described herein again.

According to a fourth aspect, a communication apparatus is provided. For beneficial effects, refer to descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. In a possible design, the communication apparatus includes a transceiver module, configured to receive first indication information from a terminal device, where the first indication information indicates a first resource not used by the terminal device, the first resource is a part or all of a second resource, and the second resource is a resource configured by an access network device for the terminal device. The transceiver module is further configured to send second indication information to the terminal device, where the second indication information indicates that the access network device reschedules a part or all of the first resource, or the second indication information indicates that the access network device does not reschedule a part or reschedules none of the first resource. The transceiver module is further configured to receive data from the terminal device by using a third resource, where the third resource is related to the part or all of the first resource indicated by the second indication information, and the third resource is a part or all of the second resource. These modules may perform corresponding functions in the method example in the second aspect. For details, refer to detailed descriptions in the method example. Details are not described herein again.

According to a fifth aspect, a communication apparatus is provided. The communication apparatus may be the terminal device in the foregoing method embodiments, or may be a chip disposed in the terminal device. The communication apparatus may alternatively be the access network device in the foregoing method embodiments, or may be a chip disposed in the access network device. The communication apparatus includes one or more processors. The one or more processors are configured to run a computer program or instructions. When the one or more processors execute the computer instructions or the instructions, the communication apparatus is enabled to perform the communication method according to any one of the first aspect or the possible designs of the first aspect, or perform the communication method according to any one of the second aspect or the possible designs of the second aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, an embodiment of this application provides a communication apparatus. The communication apparatus may be the terminal device in the foregoing method embodiments, or may be a chip disposed in the terminal device. The communication apparatus may alternatively be the access network device in the foregoing method embodiments, or may be a chip disposed in the access network device. The communication apparatus includes an input/output interface and a logic circuit. The input/output interface is configured to input and/or output information. The logic circuit is configured to perform the communication method according to any one of the first aspect or the possible designs of the first aspect, or perform the communication method according to any one of the second aspect or the possible designs of the second aspect, and perform processing based on information and/or generate information. According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the access network device in the foregoing aspects is performed.

According to a ninth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement functions of the access network device in the methods in the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the access network device in the foregoing aspects is implemented.

According to a thirteenth aspect, an embodiment of this application provides a computer program. When the computer program is run on a computer, the communication method according to any one of the first aspect or the possible designs of the first aspect is performed, or the communication method according to any one of the second aspect or the possible designs of the second aspect is performed.

According to a fourteenth aspect, a communication system is provided. The communication system may include the communication apparatus according to any one of the third aspect and the communication apparatus according to any one of the fourth aspect.

### BRIEF DESCRIPTION OF DRAWINGS

FIG. 1 is a diagram of an XR technology according to an embodiment of this application;
FIG. 2 is a diagram of an architecture of a cloud VR/AR communication network according to an embodiment of this application;
FIG. 3 is a diagram of a frame structure of a video frame according to an embodiment of this application;
FIG. 4 is a flowchart of CG scheduling according to an embodiment of this application;
FIG. 5 is a diagram of a PUSCH repetition type A according to an embodiment of this application;
FIG. 6 is a diagram of a PUSCH repetition type B according to an embodiment of this application;
FIG. 7 is a diagram of size mismatch between an XR service and a configured CG resource according to an embodiment of this application;
FIG. 8 is a diagram of information exchange between a terminal device and an access network device according to an embodiment of this application;
FIG. 9 is a diagram of information exchange between a terminal device and an access network device according to an embodiment of this application;
FIG. 10 is a diagram of a communication system according to an embodiment of this application;
FIG. 11 is a diagram of composition of a communication apparatus according to an embodiment of this application;
FIG. 12 is a flowchart of a communication method according to an embodiment of this application;
FIG. 13 is a diagram of information exchange between a terminal device and an access network device according to an embodiment of this application;
FIG. 14 is a diagram of a transmission occasion of first indication information according to an embodiment of this application;
FIG. 15 is a diagram of a transmission occasion of first indication information according to an embodiment of this application;
FIG. 16 is a diagram of a transmission occasion of first indication information according to an embodiment of this application;
FIG. 17 is a diagram of composition of a communication apparatus according to an embodiment of this application; and
FIG. 18 is a diagram of composition of a communication apparatus according to an embodiment of this application.

### DESCRIPTION OF EMBODIMENTS

Before embodiments of this application are described, technical terms in embodiments of this application are described. **5th generation (5th-generation, 5G) communication system:** With continuous development of the 5G communication system, a data transmission latency is continuously reduced, and a transmission capacity is larger. Some multimedia services with strong real-time performance and a high data capacity requirement, for example, video transmission, cloud gaming (cloud gaming, CG), and extended reality (extended reality, XR), gradually penetrate into the 5G communication system. A human interaction manner will change from two-dimensional (two-dimensional, 2D) interaction to more efficient three-dimensional (three-dimensional, 3D) interaction, and a 3D visual interaction system may depend on development of XR.

**XR technology:** The XR technology refers to all real-and-virtual combined environments and related human-machine interaction that are generated by computer technologies and wearable devices. With a rapid increase of a communication transmission rate, a real-time video transmission service has gradually become one of core services in a current network. With continuous progress and improvement of the XR technology, a related industry is also booming.

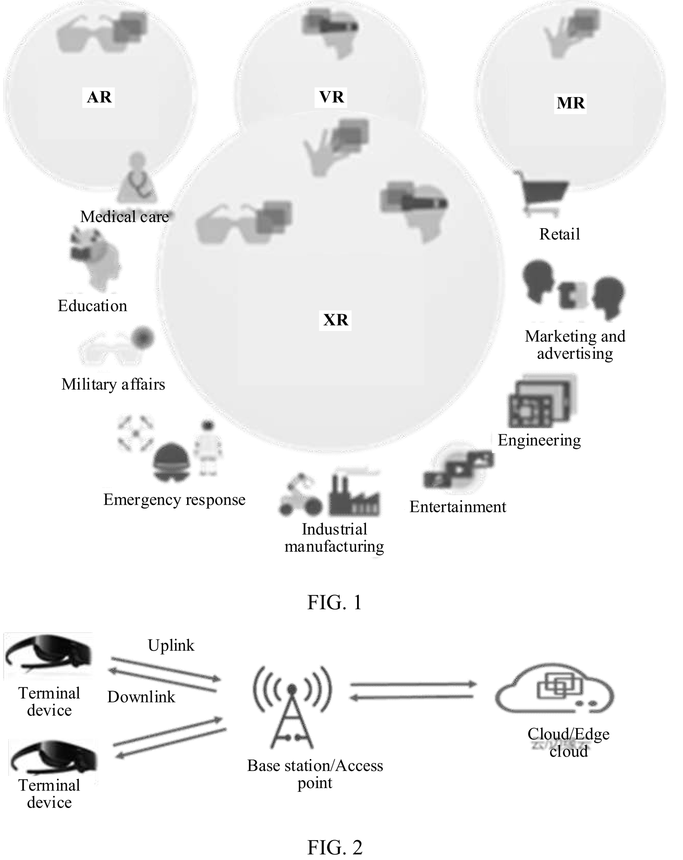

For example, as shown in FIG. 1, the XR technology may include virtual reality (virtual reality, VR), augmented reality (augmented Reality, AR), mixed reality (mixed reality, MR), and the like.

**VR technology:** As a type of XR technology, the VR technology has entered various fields closely related to production and life of people, for example, education, entertainment, military affairs, medical care, environmental protection, transportation, and public health. Compared with a conventional video service, VR has advantages such as multiple viewing angles and strong interaction, so that brand-new visual experience is provided for a user. VR integrates a plurality of technologies such as computer graphics and multimedia, to simulate functions of human sensory organs, for example, a visual sense, an auditory sense, and a tactile sense. In this way, people immerse in a virtual world generated by a computer, feeling as if they are there, and can perform real-time communication by using a language, a gesture, and the like. This enhances an immersion sense. By using the VR technology, people feel reality of the real world, and can further break through restrictions of conditions such as time and space, to have wonderful experience of entering the virtual world.

**AR technology:** In the AR technology, by using computer technologies, virtual information is superimposed to the real world, is displayed through devices such as a mobile phone, a tablet computer, and glasses, and is perceived by people. In this way, reality and virtuality are merged, so that the real world is enriched. In short, more information is given to a real object, to enhance a stereoscopic sense, and enhance a visual effect and interactive experience. **Cloud virtual reality (cloud VR) and cloud augmented reality (cloud AR):** Cloud virtual reality (cloud VR) and cloud augmented reality (cloud AR) introduce concepts and technologies of cloud computing and cloud rendering into VR/AR service applications. Through a high-rate and stable network, a display output, an audio output, and the like on a cloud are encoded, compressed, and then transmitted to user equipment (user equipment, UE). In this way, VR/AR service content is migrated to the cloud and rendered to the cloud, and a VR/AR terminal device can also meet lightweight and mobility requirements.

For example, FIG. 2 is a diagram of an architecture of a cloud VR/AR communication network. The VR/AR terminal device may be connected to the network via a base station or another access point, and obtain a VR/AR service from the cloud.

**XR service:** A video frame of the XR service is sent periodically, and a period of the video frame is a reciprocal of a frame rate, where the frame rate is a quantity of frames included in a video per second, and is in a unit of fps (frame per second). Usually, a minimum video frame rate is 24 fps. When the frame rate is lower than 24 fps, human eyes can feel obvious freezing. For a video with slow image change, 30 fps is usually sufficient. For a video with sharp image change, 60 fps is usually needed.

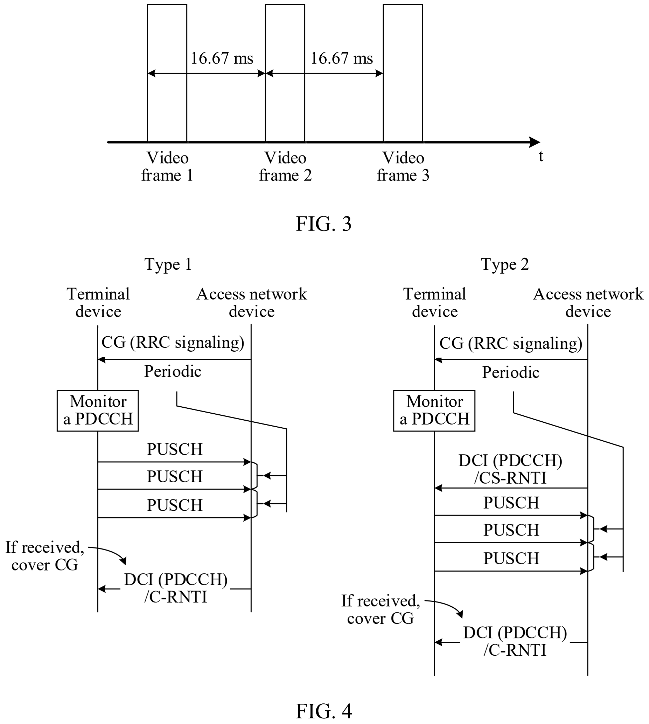

For example, as shown in FIG. 3, a frame rate of 60 fps is used as an example, and a period of a video frame is 1/60=16.67 ms. If a time length of a video of 60 fps is the same as that of a video of 30 fps, a quantity of images of the video of 60 fps is twice that of the video of 30 fps. Therefore, a size of the video of 60 fps is also about twice that of the video of 30 fps. Therefore, the frame rate is in direct proportion to a video size. A higher frame rate indicates smoother video play. In the XR service, common settings of the frame rate are 30 fps, 60 fps, 90 fps, and 120 fps. When the frame rate of the XR service is 30 fps, a video frame arrival period is 33.33 ms. When the frame rate of the XR service is 60 fps, a video frame arrival period is 16.67 ms. When the frame rate of the XR service is 90 fps, a video frame arrival period is 11.11 ms. When the frame rate of the XR service is 120 fps, a video frame arrival period is 8.33 ms.

The XR service is extremely sensitive to a rate and a latency of a data packet, to meet a requirement of a user for ultimate smooth experience. For a VR/AR service type, a data packet delay budget (packet delay budget, PDB) is 10 ms. The PDB is defined as a time threshold from time when a data packet or a video frame arrives at an access network device to time when the data packet or the video frame is successfully received by a terminal device. In addition, 60 fps is used as an example. A data rate at an application layer may reach 45 Mbps, and an average packet size of each video frame is 750 kbit.

The XR service and the video transmission service usually have a large data amount. For example, a size of a 4K video frame is about 30 kb to 100 kb. In addition, sizes of video frames usually change. Because compression rates and frame types of the video frames are different, the sizes of the video frames change greatly.

In addition, different XR services usually have different uplink and downlink service models. A display change of scene content in VR is caused by a posture or a position (an action). Position information and posture information are mainly uploaded in VR, and a data amount is small, and is usually only dozens of kbps. Downlink transmission is mainly for a rendered video stream, and a data amount is large, and may reach dozens of to hundreds of Mbps. Different from that in VR, a display change of scene content in AR is caused by a change of a fixation focus target and a change of a spatial relationship (an action) between a position and a fixation point. Visual information (including a depth) needed for perception is uploaded in AR. Therefore, uplink transmission is mainly for a clear and stable picture or video stream with a large data amount, or may be for some extracted environment feature information. Based on industry research and evaluation, for an interactive AR service, a network uplink rate needs to be approximately 2 Mbps to meet initial experience and 10 Mbps to 20 Mbps to meet advanced experience. Compared with cloud VR, cloud AR has a higher requirement on an uplink transmission rate and is more challenging in uplink transmission.

**Uplink configured grant (configured grant, CG):** The uplink configured grant is uplink configured scheduling (configured scheduling, CS), and is suitable for periodic uplink service transmission. The CG means that in an uplink transmission process, an uplink scheduling resource only needs to be allocated once by using radio resource control (radio resource control, RRC) signaling or a physical downlink control channel (physical downlink control channel, PDCCH), and then uplink transmission may be performed by periodically and repeatedly using a same time-frequency resource.

The CG may include two types. In a type 1, a related parameter of CG transmission is configured by using the RRC signaling, for example, a CG period, a CG time domain resource, and a CG frequency domain resource, and a corresponding CG resource is activated by using the RRC signaling. In a type 2, a related parameter of CG transmission is configured by using the RRC signaling, for example, a CG period, and a corresponding CG resource is configured and activated by using the PDCCH.

For example, as shown in FIG. 4, a CG scheduling procedure of the type 1 is as follows:
1. An access network device configures a related parameter of a CG resource by using RRC signaling, including a period, a CG time domain resource, a CG frequency domain resource, and the like. Herein, a plurality of parameters (for example, corresponding to different periods) of the CG resource may be included. In addition, the access network device may activate the corresponding CG resource by using the RRC signaling.
2. A medium access control (media access control, MAC) entity determines, based on a CG configuration, a slot or a symbol that is of the CG resource and that periodically takes effect, and transmits uplink data, namely, a physical uplink shared channel (physical uplink shared channel, PUSCH), in the slot or the symbol that takes effect.
3. After service transmission is completed, the access network device delivers downlink control information (downlink control information, DCI), to deactivate the CG configuration and release the CG resource.

For example, as shown in FIG. 4, a CG scheduling procedure of the type 2 is as follows:
1. An access network device configures a related parameter of a CG resource by using RRC signaling, including a CG period and the like. Herein, a plurality of parameters (for example, corresponding to different periods) of the CG resource may be included.
2. The access network device activates CG transmission by using a PDCCH, and indicates, by using a resource allocation field, a time domain resource and a frequency domain resource specifically allocated for the CG transmission.
3. A MAC entity determines, based on a CG configuration, a slot or a symbol that is of the CG resource and that periodically takes effect, and transmits uplink data in the slot or the symbol that takes effect.
4. After service transmission is completed, the access network device delivers DCI, to deactivate the CG configuration and release the CG resource.

Usually, in CG, only one transmission resource can be configured in each period, in other words, only one transport block (transport block, TB) can be transmitted. For a service having a high reliability requirement, for example, ultra-reliable low-latency communication (ultra-reliable low-latency communication, URLLC), the CG supports configuration of a plurality of transmission resources in one period, but these transmission resources are used for repetition transmission of same data, namely, different redundancy versions (redundancy version, RV) of a same TB. The RV is designed to implement incremental redundancy (incremental redundancy, IR) hybrid automatic repeat request (hybrid automatic repeat request, HARQ) transmission. To be specific, redundant bits generated by an encoder are divided into several groups, each RV defines a transmission start point, and different RVs are used for initial transmission and all retransmission, to implement gradual accumulation of redundant bits and complete an incremental redundancy HARQ operation.

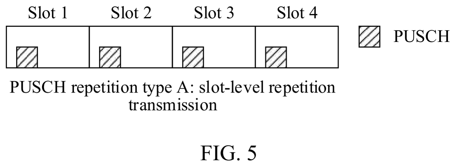

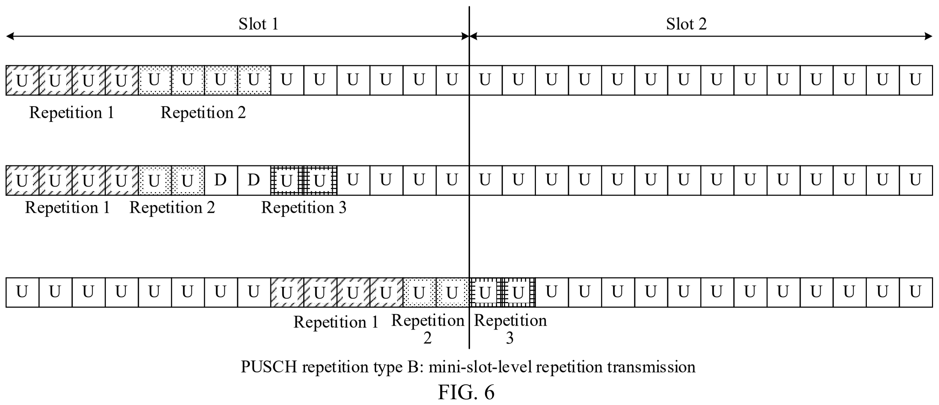

In the CG, there may be two types of PUSCH repetition transmission. As shown in FIG. 5, a PUSCH repetition type A is slot-level repetition transmission, to be specific, different RVs of a same TB are transmitted in a plurality of consecutive slots, and time-frequency resource configurations in all the slots are completely the same. As shown in FIG. 6, a PUSCH repetition type B is mini-slot (mini-slot)-level repetition transmission, to be specific, different RVs of a same TB are transmitted in a plurality of consecutive mini-slots, and time-frequency resource configurations in all the mini-slots are completely the same. Usually, one slot includes 14 symbols, and one mini-slot includes two symbols or seven symbols. In one slot, there is a symbol used for uplink transmission (marked as U) and a symbol used for downlink transmission (marked as D). Therefore, the mini-slot (mini-slot)-level repetition transmission is not necessarily continuous at a symbol level. In addition, one mini-slot (mini-slot)-level repetition transmission may alternatively be performed across a plurality of slots.

Based on the foregoing descriptions of the XR service and the CG period, for a licensed spectrum, in a CG transmission mechanism, only one TB can be transmitted in each period. However, because transmission of each video frame in the XR service usually needs to be completed by using a plurality of TBs, the foregoing CG transmission mechanism is not suitable for the XR service with the large data amount. In addition, a size of a configured CG resource is fixed, and cannot match an XR service frame characterized by a dynamically variable size. If a small quantity of resources are configured, transmission of data that is not transmitted is postponed to a next period. This increases an uplink transmission latency and deteriorates XR user experience. If sufficient resources are configured, a waste of resources is caused, and a network capacity is affected.

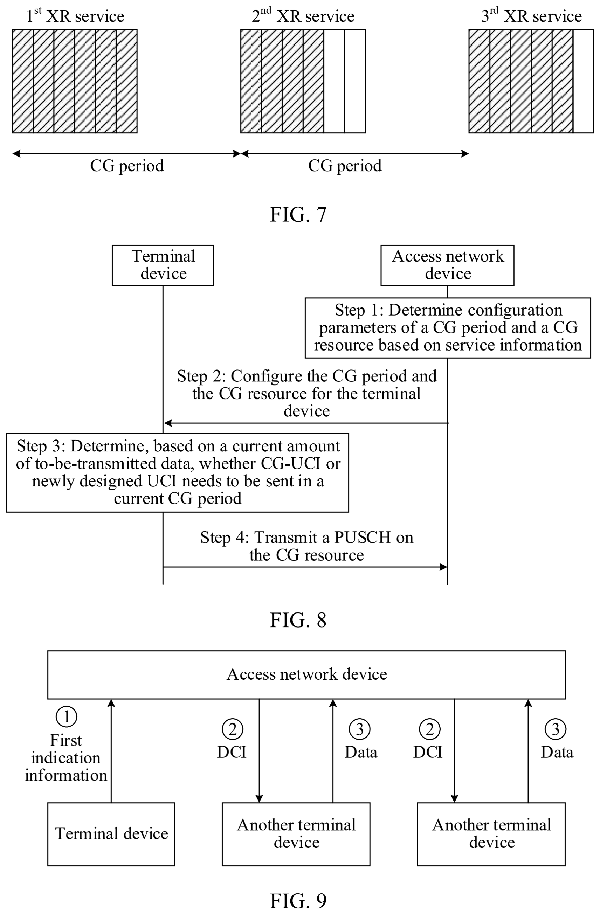

For example, as shown in FIG. 7, a CG resource preconfigured in one CG period includes six slots. For a 1^{st} XR service, the configured CG resource is just enough for transmission of an XR service #1. For a 2^{nd} XR service, the service is small, and the configured CG resource has a remaining quantity of two slots. For a 3^{rd} XR service, the service is small, and the configured CG resource has a remaining quantity of one slot.

To resolve a technical problem that the CG transmission mechanism is not suitable for an XR service with a large data amount, embodiments of this application put forward that for the licensed spectrum, in the CG transmission mechanism, a plurality of TBs may be transmitted in each CG period, to ensure normal transmission of an XR service with a large data amount.

To resolve a technical problem that the small quantity of configured resources increase the uplink transmission latency, embodiments of this application put forward that when a small quantity of resources are configured, the terminal device may send a request to the access network device, to request the access network device to configure an additional resource or re-configure a resource for the terminal device, to avoid postponing the transmission of the data that is not transmitted to the next period, shorten the uplink transmission latency, and improve the XR user experience.

To resolve a technical problem that a large quantity of configured resources cause the waste of resources and affect the network capacity, embodiments of this application put forward that when determining that a large quantity of resources are configured, the terminal device may send uplink control information (uplink control information, UCI) (or described as CG-UCI) to the access network device to indicate a CG resource not used by the terminal device, or it is described as that the terminal device sends UCI to the access network device to cancel a redundant CG resource. For example, as shown in FIG. 8, information exchange between a terminal device and an access network device may include the following steps.

Step 1: The access network device determines configuration parameters of a CG period and a CG resource based on service information.

The service information may include one or more of the following: a user service request, a quality of service (quality of service, QoS) flow establishment request, and auxiliary information that is reported by a user.

Specifically, the access network device may estimate a period and a data amount of a service based on the service information, to determine the configuration parameters of the CG period and the CG resource.

Step 2: The access network device configures the CG period and the CG resource for the terminal device.

Step 3: The terminal device determines, based on a current amount of to-be-transmitted data, whether CG-UCI or newly designed UCI needs to be sent in a current CG period.

For example, as shown in FIG. 9, if information about a current amount of to-be-transmitted data is small, and the access network device configures excessive CG resources, the terminal device determines that the CG-UCI or the newly designed UCI needs to be sent to indicate a resource not used by the terminal device. In this case, after the terminal device sends the CG-UCI or the newly designed UCI, the unused resource (namely, a canceled resource) immediately takes effect without waiting for feedback information from the access network device. The access network device may reschedule the CG resource by using downlink control information (downlink control information, DCI) to another terminal device for use.

Optionally, when the following trigger condition is met, the terminal device may send the CG-UCI to the access network device on the following transmission occasion.

The trigger condition may include the following trigger condition 1 and trigger condition 2.

Trigger condition 1: An interval between a moment t0 and a moment t1 is greater than or equal to T1.

Trigger condition 2: An amount of to-be-transmitted data of a logical channel (logical channel, LCH) corresponding to CG is greater than a total amount of data that can be carried by N TBs in one CG period.

The moment t0 represents a 1^{st} symbol or slot corresponding to a 1^{st} TB transmission opportunity in a plurality of TB transmission opportunities in one CG period (in a unit of a symbol or slot), or a symbol or slot corresponding to a 1^{st} TB transmission opportunity after data arrives at the access network device in the CG period.

The moment t1 represents a moment corresponding to an N^{th} PUSCH transmission opportunity.

The following describes T1 in detail. (1) T1 may be configured by the access network device, may be a newly defined higher-layer parameter, or may reuse an existing parameter, for example, cg-minDFI-Delay, where cg-minDFI-Delay represents a minimum duration (in a unit of a symbol) from an end symbol of a PUSCH to a start symbol of a PDCCH including a downlink feedback indication (DFI) carrying a HARQ-ACK of the PUSCH. T1 may alternatively be determined based on a plurality of values, for example, cg-minDFI-Delay and K2, where K2 represents a minimum scheduling offset from time when the terminal device receives downlink scheduling information to time when the terminal device sends an uplink PUSCH. A value of K2 may be determined based on the downlink scheduling information, for example, a "Minimum applicable scheduling offset indicator" field in the DCI, or determined based on a higher layer parameter, for example, minimumSchedulingOffsetK2. (2) T1 may alternatively be a value predefined in a protocol.

N is a configured quantity of TBs that can be transmitted in one CG period. One PUSCH for uplink transmission carries one TB, and a quantity of PUSCHs and a quantity of TBs are equal. For slot-level scheduling, one slot usually has only one PUSCH. Therefore, N may also be described as a configured quantity of PUSCHs, slots, or TBs that can be transmitted in one CG period.

When the trigger condition 1 or the trigger condition 2 is met, the terminal device may send the CG-UCI to the access network device at the moment t0. When the trigger condition 1 is not met, to be specific, the interval between the moment t0 and the moment t1 is less than T1, a resource may be unavailable because a processing latency of the access network device is excessively large. In this case, the terminal device may not need to send the CG-UCI to the access network device. When the trigger condition 2 is met, it indicates that the CG resource is insufficient in this case, and the terminal device may send the CG-UCI to the access network device, to indicate that dynamic scheduling is needed or indicate to update a CG configuration, so as to add a transmission resource.

Step 4: The terminal device transmits a PUSCH on the CG resource.

The PUSCH may include data and possible CG-UCI information.

Based on the method shown in FIG. 8, after reporting the CG-UCI to indicate the unused resource, the terminal device starts to perform air interface transmission without waiting for a feedback from the access network device. In this case, it is possible that the access network device does not reschedule the unused resource reported by the terminal device. However, on the terminal device side, the terminal device considers that the access network device reschedules this part of resource. As a result, the access network device and the terminal device do not align cognition of the unused resource reported by the terminal device, in other words, the access network device and the terminal device do not exchange information about a purpose of the unused resource. Consequently, a waste of resources is caused.

To resolve this technical problem, an embodiment of this application provides a communication method. The method may include: A terminal device sends first indication information to an access network device, receives second indication information from the access network device, and sends data to the access network device by using a third resource. The first indication information indicates a first resource not used by a terminal device, the first resource is a part or all of a second resource, and the second resource is a resource configured by the access network device for the terminal device. The second indication information indicates that the access network device reschedules a part or all of the first resource, or the second indication information indicates that the access network device does not reschedule a part or reschedules none of the first resource. The third resource is related to the part or all of the first resource indicated by the second indication information, and the third resource is a part or all of the second resource. In this embodiment of this application, after indicating, to the access network device, the first resource not used by the terminal device, the terminal device may send, when receiving the second indication information, the data to the access network device by using the third resource. This adds an interaction process between the access network device and the terminal device, so that the access network device and the terminal device align cognition of the unused resource reported by the terminal device, and a waste of resources is avoided.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, NR V2X) system. The communication method may also be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system like 6G. Alternatively, the communication system may be a non-3GPP communication system. This is not limited.

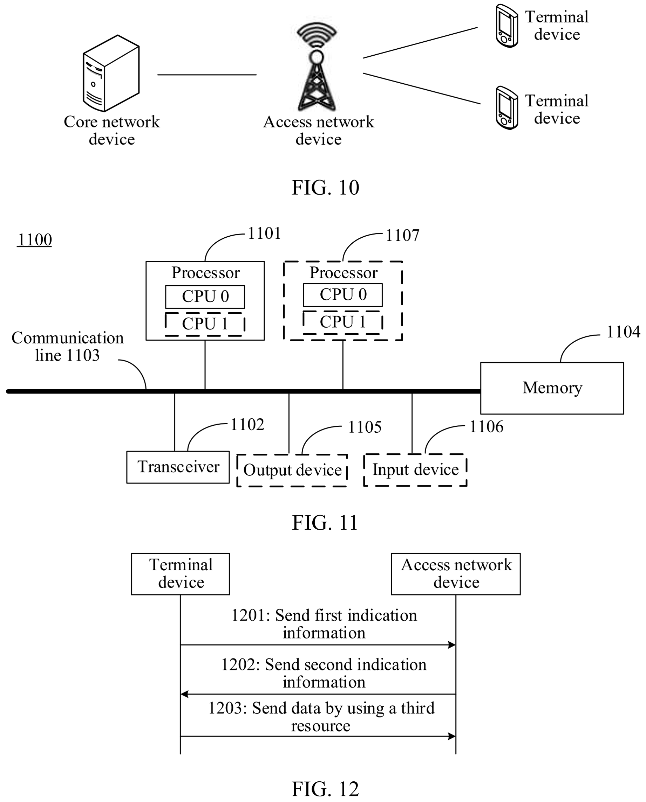

The following uses FIG. 10 as an example to describe the communication system provided in embodiments of this application.

FIG. 10 is a diagram of a communication system according to an embodiment of this application. As shown in FIG. 10, the communication system may include one or more terminal devices, an access network device (or described as a radio access network device), and a core network device.

In FIG. 10, the terminal device may be located in cell coverage of the access network device, and the terminal device may be connected to the access network device in a wireless manner. For example, the terminal device may perform air interface communication with the access network device on an uplink (uplink, UL) or a downlink (downlink, DL). For example, the terminal device may send uplink data to the access network device in an UL direction on a physical uplink shared channel (physical uplink shared channel, PUSCH), and the access network device may send downlink data to the terminal device in a DL direction on a physical downlink shared channel (physical downlink shared channel, PDSCH).

The terminal device in FIG. 10 may be a device having a wireless transceiver function or a chip or a chip system that can be disposed in the device, may allow a user to access a network, and is a device configured to provide voice and/or data connectivity for the user. The terminal device may be located at a fixed position, or may be mobile. The terminal device may also be referred to as user equipment (user equipment, UE), a subscriber unit (subscriber unit), a terminal (terminal), a mobile station (mobile station, MS), a mobile terminal (mobile terminal, MT), or the like. Specifically, the terminal device in FIG. 10 may be a cellular phone (cellular phone), a smartphone (smartphone), a wireless data card, a mobile phone (mobile phone), a personal digital assistant (personal digital assistant, PDA) computer, a tablet computer or a computer having a wireless transceiver function, a wireless modem (modem), a handheld device (handset), or a laptop computer (laptop computer). Alternatively, the terminal device may be a VR terminal, an AR terminal, a wireless terminal in industrial control, a wireless terminal in self driving, a wireless terminal in telemedicine, a wireless terminal in a smart grid, a wireless terminal in transportation safety, a wireless terminal in a smart city (smart city), a wireless terminal in a smart home (smart home), a machine type communication (machine type communication, MTC) terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The access network device in FIG. 10 may be any device that is deployed in an access network and that can perform wireless communication with the terminal device, may be described as an access device that is used by the terminal device to access the communication system in a wireless manner, or may be a chip or a chip system that can be disposed in the device, and is mainly configured to implement functions such as a wireless physical control function, resource scheduling and radio resource management, radio access control, and mobility management. The access network device may be further connected to the core network device in a wireless or wired manner. Specifically, the access network device may be a device that supports wired access, or may be a device that supports wireless access. For example, the access network device may be an access network (access network, AN) device/a radio access network (radio access network, RAN) device, and includes a plurality of AN/RAN nodes. The AN/RAN node may be an access point (access point, AP), a NodeB (NodeB, NB), a macro base station, a micro base station (or described as a small cell), a pico base station, a balloon station, a relay station, an enhanced NodeB (enhanced NodeB, eNB), a next generation eNB (next generation eNB, ng-eNB), a next generation NodeB (next generation NodeB, gNB), a base station in a 5G communication system, a base station in a future mobile communication system or an access node in a wireless fidelity (wireless fidelity, Wi-Fi) system, a transmission reception point (transmission reception point, TRP), a transmission point (transmission point, TP), a transmission measurement function (transmission measurement function, TMF), a wearable device, a vehicle-mounted device, another access node, or the like. A specific technology and a specific device form that are used by the access network device are not limited in embodiments of this application. Alternatively, the access network device may be of a central unit (central unit, CU)/distributed unit (distributed unit, DU) architecture. In this case, the access network device may include two network elements: a CU and a DU. Alternatively, the access network device may be of a control plane-user plane (control plane-user plane, CP-UP) architecture. In this case, the access network device may include three network elements: a control plane of a CU (CU-CP), a user plane of the CU (CU-UP), and a DU. This is not limited.

Optionally, the access network device and the terminal device may be deployed on land, where the deployment includes indoor or outdoor, and handheld or vehicle-mounted deployment; or may be deployed on water; or may be deployed on an airplane, a balloon, and a satellite in air. Application scenarios of the access network device and the terminal device are not limited in embodiments of this application.

Optionally, embodiments of this application are applicable to downlink signal transmission, uplink signal transmission, and D2D signal transmission. For the downlink signal transmission, a sending device is an access network device, and correspondingly, a receiving device is a terminal device. For the uplink signal transmission, a sending device is a terminal device, and correspondingly, a receiving device is an access network device. For the D2D signal transmission, a sending device is a terminal device, and correspondingly, a receiving device is also a terminal device. A direction of signal transmission is not limited in embodiments of this application.

Optionally, communication between the access network device and the terminal device and communication between terminal devices may be performed by using a licensed spectrum, an unlicensed spectrum, or both a licensed spectrum and an unlicensed spectrum. A spectrum below 6 GHz, a spectrum above 6 GHz, or both a spectrum below 6 GHz and a spectrum above 6 GHz may be used for the communication between the access network device and the terminal device and the communication between the terminal devices. Spectrum resources used between the access network device and the terminal device are not limited in embodiments of this application.

The core network device in FIG. 10 is mainly responsible for providing a user connection, performing user management, and completing service bearing, and serves as a bearer network to provide an interface to an external network.

Optionally, the core network device and the access network device may be different physical devices that are independent of each other, or functions of the core network device and logical functions of the access network device may be integrated into a same physical device, or some functions of the core network device and some functions of the access network device may be integrated into one physical device, or the core network device and the access network device may be disposed in a chip or a chip system of the foregoing device. This is not limited.

It should be noted that the terminal device, the access network device, and the core network device in embodiments of this application each may be one or more chips, or a system on a chip (system on a chip, SoC), or the like. FIG. 10 is merely an example accompany drawing, and a quantity of devices included in FIG. 10 is not limited. In addition, in addition to the devices shown in FIG. 10, the communication system may further include another device, for example, may further include a wireless relay device and a wireless backhaul device. Names of the devices and the links in FIG. 10 are not limited. In addition to the names shown in FIG. 10, the devices and the links may further have other names. This is not limited.

During specific implementation, each terminal device, the access network device, and the core network device shown in FIG. 10 may use a composition structure shown in FIG. 11, or include parts shown in FIG. 11. FIG. 11 is a diagram of composition of a communication apparatus 1100 according to an embodiment of this application. The communication apparatus 1100 may be a terminal device or a chip or a system on a chip in the terminal device, may be an access network device or a chip or a system on a chip in the access network device, or may be a core network device or a chip or a system on a chip in the core network device. As shown in FIG. 11, the communication apparatus 1100 includes a processor 1101, a transceiver 1102, and a communication line 1103.

Further, the communication apparatus 1100 may further include a memory 1104. The processor 1101, the memory 1104, and the transceiver 1102 may be connected through the communication line 1103.

The processor 1101 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus having a processing function, for example, a circuit, a component, or a software module. This is not limited.

The transceiver 1102 is configured to communicate with another device or another communication network. The another communication network may be an Ethernet, a radio access network (radio access network, RAN), a wireless local area network (wireless local area network, WLAN), or the like. The transceiver 1102 may be a module, a circuit, a transceiver, or any apparatus that can implement communication.

The communication line 1103 is used for transmission of information between parts included in the communication apparatus 1100.

The memory 1104 is configured to store instructions. The instructions may be a computer program.

The memory 1104 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1104 may exist independently of the processor 1101, or may be integrated with the processor 1101. The memory 1104 may be configured to store instructions, program code, some data, or the like. The memory 1104 may be located in the communication apparatus 1100, or may be located outside the communication apparatus 1100. This is not limited. The processor 1101 is configured to execute the instructions stored in the memory 1104, to implement a communication method provided in the following embodiments of this application.

In an example, the processor 1101 may include one or more CPUs, for example, a CPU 0 and a CPU 1 in FIG. 11.

In an optional implementation, the communication apparatus 1100 includes a plurality of processors. For example, in addition to the processor 1101 in FIG. 11, the communication apparatus 1100 may further include a processor 1107. In an optional implementation, the communication apparatus 1100 further includes an output device 1105 and an input device 1106. For example, the input device 1106 is a device like a keyboard, a mouse, a microphone, or a joystick, and the output device 1105 is a device like a display or a speaker (speaker).

It should be noted that the communication apparatus 1100 may be a desktop computer, a portable computer, a network server, a mobile phone, a tablet computer, a wireless terminal, an embedded device, a chip system, or a device having a structure similar to that in FIG. 11. In addition, the composition structure shown in FIG. 11 does not constitute a limitation on the communication apparatus. In addition to the parts shown in FIG. 11, the communication apparatus may include more or fewer parts than those shown in the figure, or combine some parts, or have different part arrangements.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 10, refer to FIG. 12. A communication method provided in embodiments of this application is described. A terminal device may be any terminal device in the communication system shown in FIG. 10, and an access network device may be any access network device in the communication system shown in FIG. 10. The terminal device and the access network device described in the following embodiments each may have the parts shown in FIG. 11. Processing performed by a single execution body (the terminal device or the access network device) shown in embodiments of this application may alternatively be divided into processing performed by a plurality of execution bodies. These execution bodies may be logically and/or physically separated. This is not limited.

FIG. 12 is a flowchart of a communication method according to an embodiment of this application. As shown in FIG. 12, the method may include the following steps.

Step 1201: A terminal device sends first indication information to an access network device. Correspondingly, the access network device receives the first indication information from the terminal device.

The first indication information may indicate a first resource not used by the terminal device, the first resource is a part or all of a second resource, and the second resource is a resource configured by the access network device for the terminal device.

The first resource not used by the terminal device may also be described as a first resource that can be canceled (may be canceled, may be released, can be released, may not be used, are not needed, or the like) by the terminal device.

For example, the access network device may configure a fixed CG resource for the terminal device in each CG period in the uplink CG manner shown in FIG. 4, for example, configure a second resource in each CG period. The terminal device may determine, based on a service requirement of the terminal device, the first resource not used by the terminal device, and indicate the first resource to the access network device by using the first indication information.

For example, the terminal device may perform resource mapping based on a data amount and a sending period that are of service data of the terminal device and according to a modulation and coding scheme (modulation and coding scheme, MCS) preconfigured by the access network device, to determine a quantity of resources used for transmission of the service data and a position of the used resources. If the terminal device transmits a small amount of data in a current CG period, the second resource is over-configured. To be specific, the terminal device transmits the data by using a part of the preconfigured second resource, and there is a first resource not used by the terminal device.

For example, an example in which the access network device configures 20 resources for the terminal device in one CG period is used. Assuming that the terminal device can complete good transmission by using 10 resources, the terminal device may indicate, to the access network device by using the first indication information, 10 resources not used by the terminal device.

The first resource may include one or more resources, and the resource may be a time domain resource, or may be a frequency domain resource.

For example, one resource may be one CG PUSCH transmission occasion (CG PUSCH transmission occasion), one slot, one mini-slot, one TB, one resource element (resource element, RE), or one resource block (resource block, RB). This is not limited.

Optionally, the resources included in the first resource are consecutive resources. Alternatively, the resources included in the first resource are discrete resources.

The terminal device may transmit the service data by using consecutive resources, or may transmit the service data by using discrete resources. Correspondingly, the first resource not used by the terminal device may be a consecutive resource, or may be a discrete resource.

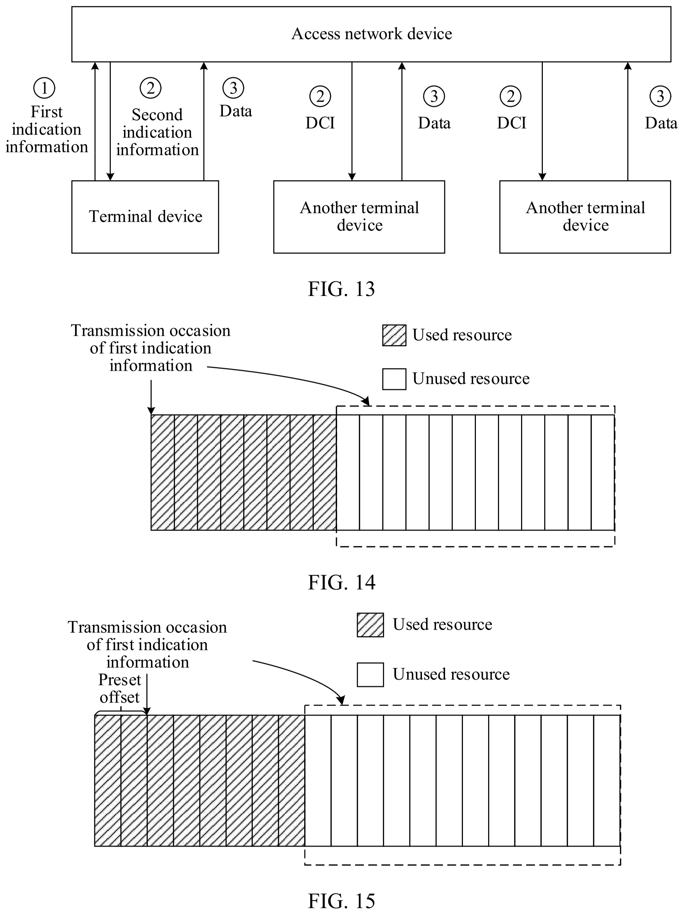

Optionally, as shown in FIG. 13, the terminal device may include, in a PUSCH, UCI carrying the first indication information, and send the PUSCH to the access network device.

The UCI may be CG-UCI, or may be newly defined or newly designed UCI. This is not limited.

Step 1202: The access network device sends second indication information to the terminal device. Correspondingly, the terminal device receives the second indication information from the access network device.

The second indication information may indicate that the access network device reschedules a part or all of the first resource, or the second indication information may indicate that the access network device does not reschedule a part or reschedules none of the first resource.

The second indication information may also be described as feedback information, acknowledgment information, or the like. This is not limited.

When receiving the first indication information, the access network device may determine the first resource not used by the terminal device, determine, based on the first resource, whether to reschedule the part or all of the first resource to another terminal device, and send the corresponding second indication information to the terminal device.

For example, as shown in FIG. 13, if the access network device determines to reschedule the part or all of the first resource to the another terminal device, the access network device may indicate the part or all of the first resource to the another terminal device by using DCI. The another terminal device may perform data transmission by using a CG resource preconfigured by the access network device and the part or all of the first resource temporarily indicated by the access network device.

The DCI may be dynamically scheduled DCI, or may be preconfigured DCI associated with the CG period. When the access network device reschedules the part or all of the first resource not used by the terminal device, the access network device indicates the part or all of the first resource to the another terminal device by using the DCI.

Optionally, when the second indication information indicates that the access network device reschedules the part of the first resource, the second indication information may include resource information of the part of the first resource rescheduled by the access network device, or the second indication information may include resource information of a part of the first resource not rescheduled by the access network device, or the second indication information may include both resource information of the part of the first resource rescheduled by the access network device and resource information of a part of the first resource not rescheduled by the access network device.

Similarly, when the second indication information indicates that the access network device does not reschedule the part of the first resource, the second indication information may include resource information of a part of the first resource rescheduled by the access network device, or the second indication information may include resource information of the part of the first resource not rescheduled by the access network device, or the second indication information may include both resource information of a part of the first resource rescheduled by the access network device and resource information of the part of the first resource not rescheduled by the access network device.

Optionally, different from the foregoing case in which the access network device sends, regardless of whether the access network device reschedules the part or all of the first resource, the second indication information to the terminal device, the access network device may alternatively not send the second indication information to the terminal device when the access network device reschedules none of the first resource. When the terminal device does not receive, within a preset duration, the second indication information sent by the access network device, the terminal device may consider by default that the access network device reschedules none of the first resource.

Step 1203: The terminal device sends data to the access network device by using a third resource. Correspondingly, the access network device receives the data from the terminal device by using the third resource.

The third resource is related to the part or all of the first resource indicated by the second indication information, and the third resource is a part or all of the second resource.

Optionally, after the terminal device performs air interface transmission, it is considered that the unused first resource takes effect.

In a first possible design, the second indication information indicates that the access network device reschedules all of the first resource, and the third resource may be a resource that is in the second resource and that is other than the first resource.

In a second possible design, the second indication information indicates that the access network device reschedules the part of the first resource, and the third resource is a resource that is in the second resource and that is other than the part of the first resource rescheduled by the access network device.

Optionally, the terminal device may update the MCS, and remap the third resource according to an updated MCS. In other words, when performing data transmission, the terminal device uses the third resource to perform data transmission.

In a third possible design, the second indication information indicates that the access network device reschedules none of the first resource, and the third resource is the second resource.

Optionally, the terminal device may update the MCS, and remap the third resource according to an updated MCS. In other words, when performing data transmission, the terminal device uses the third resource to perform data transmission.

In a fourth possible design, the second indication information indicates that the access network device does not reschedule the part of the first resource, and the third resource is a resource that is in the second resource and that is other than a part of the first resource rescheduled by the access network device.

Optionally, the terminal device may update the MCS, and remap the third resource according to an updated MCS. In other words, when performing data transmission, the terminal device uses the third resource to perform data transmission.

In a fifth possible design, the terminal device does not receive the second indication information within the preset duration, and the third resource is the second resource.

Optionally, the terminal device may update the MCS, and remap the third resource according to an updated MCS. In other words, when performing data transmission, the terminal device uses the third resource to perform data transmission.

Based on the foregoing five possible designs, when remapping the third resource, the terminal device may remove, based on the second indication information, the resource rescheduled by the access network device, to implement the remapping of the third resource.

Optionally, the terminal device may receive third indication information from the access network device, and determine, based on the third indication information, whether to update the MCS.

The third indication information may indicate the terminal device to update the MCS, or the third indication information may indicate the terminal device not to update the MCS.

The access network device may send, to the terminal device when rescheduling a part of the first resource or when not rescheduling a part or rescheduling none of the first resource, the third indication information indicating the terminal device to update the MCS. Alternatively, the access network device may send, to the terminal device when rescheduling all of the first resource, the third indication information indicating the terminal device not to update the MCS.

Optionally, when sending, to the terminal device, the third indication information indicating the terminal device to update the MCS, the access network device may further include a value of the updated MCS in the third indication information, and the terminal device may determine the value of the updated MCS based on the third indication information.

Optionally, the access network device may include the second indication information and the third indication information in same signaling and send the signaling to the terminal device.

Alternatively, the terminal device may determine, based on the second indication information, whether to update the MCS.

When the second indication information indicates that the access network device reschedules a part of the first resource, or does not reschedule a part or reschedules none of the first resource, the terminal device may determine to update the MCS. Alternatively, when the second indication information indicates that the access network device reschedules all of the first resource, the terminal device may determine not to update the MCS. Alternatively, when the terminal device does not receive the second indication information within the preset duration, the terminal device may determine not to update the MCS.

Optionally, an MCS update rule may be preconfigured or pre-specified. For example, before sending the first indication information to the access network device, the terminal device may receive one MCS preconfigured by the access network device. The terminal device evaluates, according to the preconfigured MCS, the first resource not used by the terminal device, and indicates, to the access network device by using the first indication information, the first resource not used by the terminal device. When receiving the second indication information from the access network device, the terminal device may adjust the MCS according to the pre-specified MCS update rule.

The MCS update rule may be that the MCS negotiated by the access network device and the terminal device has a plurality of candidate values. For example, the candidate values of the MCS include m1 and m2. If the second indication information of the access network device indicates that the access network device reschedules a part of the first resource or does not reschedule a part of the first resource, the terminal device may remap a remaining CG resource (namely, the third resource) according to an MCS of m1. If the second indication information of the access network device indicates that the access network device reschedules none of the first resource, the terminal device may perform resource remapping on all of a remaining CG resource according to an MCS of m2. Alternatively, if the second indication information of the access network device indicates that the access network device reschedules all of the first resource, the terminal device performs resource mapping according to the previous MCS, and performs air interface transmission, without updating the value of the MCS.

Optionally, in addition to considering whether the access network device reschedules a part or all of the first resource indicated by the second indication information of the access network device, the MCS update rule is further related to a quantity of resources included in the third resource. In other words, the value of the updated MCS is related to the quantity of resources included in the third resource.

A larger quantity of resources included in the third resource indicates that a smaller value of the MCS may be used to remap the third resource, and that a lower data rate may be used to remap the resource, so that transmission stability is improved.

For example, an example in which the candidate values of the MCS negotiated by the access network device and the terminal device are m1, m2, and m3 is used. The quantity of resources included in the third resource determined by the terminal device may be classified into different levels, for example, L1, L2, and L3. L1 indicates a minimum quantity of resources included in the third resource, and L3 indicates a maximum quantity of resources included in the first resource. The levels of the quantity of resources included in the third resource determined by the terminal device are related to selection of the value of the MCS. It is assumed that m1>m2>m3. If the second indication information indicates that the access network device reschedules a part of the first resource, the terminal device may use m3 to remap the third resource when the level of the quantity of resources included in the third resource is L1, use m2 to remap the third resource when the level of the quantity of resources included in the third resource is L2, or use m1 to remap the third resource when the level of the quantity of resources included in the third resource is L3.

Based on the method shown in FIG. 12, the terminal device may perform proper resource mapping on the CG resource preconfigured for the terminal device. If the resource not used by the terminal device is not rescheduled by the access network device, the terminal device may remap the resource, fully use the resource and configure the resource for the terminal device, or perform data transmission by using all of the preconfigured CG resource. If the resource not used by the terminal device is rescheduled by the access network device to another terminal device, a high resource utilization rate may be implemented, and a network capacity may be increased. In addition, the MCS update rule is provided, to further improve the resource utilization rate. In addition, an interaction process between the access network device and the terminal device is added. The terminal device may perform different resource configuration based on the second indication information of the access network device, to avoid a waste of resources.

Based on the method shown in FIG. 12, optionally, when the terminal device sends the first indication information to the access network device, if an end moment of the first resource is after a first moment, the terminal device sends the first indication information to the access network device. If an end moment of the first resource is before a first moment, the terminal device may not need to send the first indication information to the access network device. In other words, a trigger condition for sending the first indication information by the terminal device to the access network device is that the end moment of the first resource is after the first moment.

The end moment of the first resource may be greater than a first threshold.

For example, a value of the first threshold may be S or N, a value of S may be any one of the following processing time, and a value of N may be a sum of a plurality of the following processing time:
processing time 1: from end time of sending the first indication information by the terminal device to end time of obtaining the first indication information by the access network device through decoding; or
processing time 2: from end time of obtaining the first indication information by the access network device through decoding to end time of sending the second indication information by the access network device; or
processing time 3: from end time of sending the second indication information by the access network device to end time of receiving the second indication information by the terminal device; or
processing time 4: from end time of receiving the second indication information by the terminal device to end time of sending the data by the terminal device; or
processing time 5: from end time of sending downlink control information by the access network device to another terminal device to end time of sending data by the another terminal device.

Optionally, the terminal device may receive, from the access network device, fourth indication information indicating the first threshold, and determine the first threshold based on the fourth indication information.

The fourth indication information may include time information of one or more of the processing time 1 to the processing time 5. Alternatively, it is described as that the fourth indication information may include a processing requirement on one or more of the processing time 1 to the processing time 5. The processing requirement includes a requirement on different processing time for different signaling, information, or channels.

After determining the foregoing processing time, the access network device indicates corresponding time information to the terminal device by using signaling. Considering that the processing time is almost unchanged or slightly changed in a period of time, and has little impact on a corresponding decision rule, the signaling indicating the processing time may be RRC signaling or MAC CE signaling. If the processing time changes, the access network device may quickly update information about the corresponding processing time via the terminal device by using DCI signaling.

Determining of a form of the signaling is only one case. If the access network device has a low requirement on load of the DCI, the access network device may indicate the processing time in each CG period, in a limited quantity of CG periods, or in all CG periods by using the DCI. In other words, the form of the signaling is not particularly limited in this application, and the signaling may be RRC signaling, may be MAC CE signaling, or may be DCI signaling. The signaling may be pre-specified, or may be customized by the access network device. This is not limited.

The terminal device may obtain the time information of the processing time by using the signaling sent by the access network device, to determine the first threshold, and then determine whether to report the first indication information. The time information may alternatively be used to determine a reporting moment of the first indication information, or may be used to determine the value of the MCS of the terminal device, or the like. This is not limited.

Based on the foregoing descriptions of the fourth indication information, the access network device sends the time information of the processing time to the terminal device, to help determine whether a network can obtain a benefit from the first resource not used by the terminal device. In addition, this helps the terminal device select, based on the processing time indicated by the access network device, an appropriate MCS or coding and modulation mode to maximize or optimize resource utilization, to improve the resource utilization rate. The access network device specifies the processing time. This helps perform a subsequent proper procedure and improve the network capacity.

If the terminal device determines, through evaluation based on a channel parameter setting, that the end moment of the first resource is less than or equal to the first threshold, because the processing time is long, after both the access network device and the terminal device complete processing of some signaling or information, the first resource not used by the terminal device may be already missed and cannot be allocated to another terminal device for use. In this case, the terminal device may not report the first indication information.

If the terminal device determines, through evaluation based on a channel parameter setting, that the end moment of the first resource is greater than the first threshold, after the access network device and the terminal device process the signaling or the information, a part of the first resource not used by the terminal device is still valid, and the partial valid resource may be used by another terminal device. In this case, the terminal device may report the first indication information.

For example, five resources are preconfigured for the terminal device in one CG period. It is assumed that the terminal device needs to use a 1^{st}, a 4^{th}, and a 5^{th} resources to send a PUSCH, and unused resources may be a 2^{nd} and a 3^{rd} resources. If total processing time of the access network device and the terminal device is greater than three resources, a resource recycling benefit cannot be obtained. Finally, the terminal device may not send the first indication information.

In another example, 20 resources are preconfigured for the terminal device in one CG period. It is assumed that the terminal device needs a 1^{st}, a 2^{nd}, and a 3^{rd} resources to send a PUSCH, and unused resources may be a 4^{th} to a 20^{th} resources. If total processing time of the access network device and the terminal device is less than 20 slots, a resource recycling benefit may be obtained. In this case, the terminal device may send the first indication information.

Based on the foregoing descriptions, resources may be classified into two types: valid resource and invalid resource. The valid resource means that after processing operations of the access network device and the terminal device are performed, there is still a remaining resource that can be used. This part of resource is referred to as a valid resource. The invalid resource means that after processing operations of the access network device and the terminal device are performed, a resource canceled by the terminal device is already out of date, in other words, a resource not used by the terminal device already cannot be used any longer. This part of resource is referred to as an invalid resource.

The processing operations of the access network device and the terminal device may include interpreting the first indication information by the access network device after the terminal device sends the first indication information, may further include sending the second indication information by the access network device to the terminal device after interpreting the first indication information, may further include interpreting the second indication information by the terminal device after the access network device sends the second indication information, may further include performing resource remapping by the terminal device after interpreting the second indication information, and may further include performing air interface transmission by the terminal device after performing resource remapping.

In general, whether a resource is a valid resource or an invalid resource depends on time when the resource takes effect. For example, an unused resource is on an (N+2)^{th} CG PUSCH transmission occasion, and time when the resource takes effect is on an N^{th} CG PUSCH transmission occasion. Because the time when the resource takes effect is earlier than time of the unused resource, it is considered that an interval between the two CG PUSCH transmission occasions, namely, two CG PUSCH transmission occasions, is a valid resource, and the access network device may reschedule the two CG PUSCH transmission occasions to another terminal device for use. For example, an unused resource is on an (N+1)^{th} CG PUSCH transmission occasion, and time when the resource takes effect is on an (N+2)^{th} CG PUSCH transmission occasion. Because the time when the resource takes effect is later than time of the unused resource, it is considered that an interval between the two CG PUSCH transmission occasions, namely, one CG PUSCH transmission occasion, is an invalid resource, and the access network device cannot obtain a benefit from the one CG PUSCH transmission occasion.

Because the access network device or the terminal device takes long time to process the signaling or the information, if a small quantity of resources are not used by the terminal device, and do not remain valid after the access network device or the terminal device processes the signaling or the information, the resources cannot be reused through an air interface. For this type of resource, a feasible method is as follows: The terminal device sends fifth indication information to another terminal device.

The fifth indication information may indicate one or more of the another terminal device to perform data transmission by using the first resource.

The terminal device may indicate, through a PC5 interface, the first resource to the another terminal device for use. An indication method may be: indicating by using sidelink control signaling (sidelink control information, SCI) signaling. A processing latency of SCI is about two slots. According to the protocol, a maximum of three resources can be indicated in one piece of SCI signaling. Considering an XR service with a large amount of data, a plurality of CG resources may be configured in one CG period. A quantity of resources indicated in one piece of SCI signaling may be further extended. For example, if unused resources of a terminal device 1 include five resources, the terminal device 1 may indicate the five resources to a terminal device 2 by using SCI signaling, and the terminal device 2 may use the five resources to perform data transmission of the terminal device 2.

In a possible scenario, a preconfigured CG resource is insufficient to ensure the data transmission of the terminal device 2 and data transmission of a terminal device 3. In other words, in a specific CG period, data that is of the terminal device 2 and that waits for transmission and data that is of the terminal device 3 and that waits for transmission each is greater than the preconfigured CG resource. For the terminal device 1, in a current CG period, data that is of the terminal device 1 and that waits for transmission is less than the preconfigured CG resource, and the terminal device 1 may indicate an unused first resource to the terminal device 2 and/or the terminal device 3 for use. If the terminal device 2 and the terminal device 3 each want the resource canceled by the terminal device 1, the terminal device 2 may indicate a requirement of the terminal device 2 to the terminal device 1 by using SCI signaling, and the terminal device 3 may indicate a requirement of the terminal device 3 to the terminal device 1 by using SCI signaling. The terminal device 1 indicates, to a corresponding terminal device according to a priority rule, that the terminal device can use the resource not used by the terminal device 1.

The priority rule may be predefined, or may be dynamically indicated. For example, the priority rule is determined by a size of an additional resource needed by a terminal device to which an additional resource is to be allocated to complete transmission of all data of the terminal device. For example, the terminal device 2 further needs three resources to complete transmission of all data, and the terminal device 3 further needs five resources to complete transmission of all data. The additional resources needed by the terminal device 2 and the terminal device 3 are compared. A smaller quantity of needed additional resources indicates a higher priority. If a priority of the terminal device 2 is higher, the terminal device 1 may indicate the unused resource to the terminal device 2 for use, to preferentially ensure transmission of the terminal device 2, and improve the network capacity. If a quantity of resources that can be canceled by the terminal device 1 is greater than 3, the terminal device 1 may indicate three resources in the unused resources to the terminal device 2 for use, and indicate a remaining resource in the unused resources to the terminal device 3 for use.

Based on the foregoing descriptions, the access network device may set the first threshold for the terminal device, and the first threshold may be related to one or more lengths of processing time. When the trigger condition is met, the terminal device may report the first indication information, and the access network device may reschedule, to another terminal device, the first resource not used by the terminal device. If the trigger condition is not met, the terminal device may indicate, by using the SCI signaling, the first resource not used by the terminal device to another terminal device for use. In this manner, the first resource not used by the terminal device may be allocated to another terminal device for use, so that the resources are saved, and the network capacity can be further improved. In addition, a case in which the access network device mistakenly considers that a transmission error occurs and continuously performs retransmission scheduling can be avoided, to avoid additional signaling overheads. The terminal device may also enter sleep as soon as possible without listening to subsequent CG-DFI, to reduce power consumption.

Optionally, based on the foregoing descriptions of the first indication information and the trigger condition of the first indication information, when the terminal device determines to send the first indication information to the access network device, the terminal device may send the first indication information to the access network device with reference to the following quantity of sending moments and transmission occasion.

In one CG period, the terminal device may send the first indication information to the access network device for once or for a plurality of times.

In a first possible design, the first resource is a consecutive resource, and the terminal device sends the first indication information to the access network device once in one CG period.

A sending moment of the first indication information is a 1^{st} symbol for sending a PUSCH in one CG period; or an offset between a sending moment of the first indication information and a 1^{st} symbol for sending a PUSCH in one CG period is a preset offset.

The preset offset may be related to a change of a channel state, may be related to a change of the MCS, or may be related to a change of an encoding rate. The preset offset may be sent by the access network device to the terminal device by using a DCI format, to indicate an offset. The DCI may be non-scheduled DCI, or may be scheduled DCI. For example, as shown in FIG. 14, when all data packets in a service period arrive, the terminal device may determine the first resource not used by the terminal device, and send the first indication information, along with PUSCH sending, on a 1^{st} symbol for sending a PUSCH in one CG period, to indicate, to the access network device, the first resource not used by the terminal device.

In another example, as shown in FIG. 15, there is a preset offset between a sending moment of the first indication information and a 1^{st} symbol for sending a PUSCH in one CG period.

In a second possible design, the first resource is a discrete resource, and the terminal device sends the first indication information to the access network device once in one CG period.

A sending moment of the first indication information is a 1^{st} symbol for sending a PUSCH in one CG period; or an offset between a sending moment of the first indication information and a 1^{st} symbol for sending a PUSCH in one CG period is a preset offset.

For specific descriptions of the sending moment of the first indication information, refer to related descriptions in the first possible design. Details are not described again.

In a third possible design, the first resource is a discrete resource, and the terminal device sends the first indication information to the access network device for a plurality of times in one CG period.

The first resource includes N parts, and a sending moment of the first indication information is a 1^{st} symbol that is for sending a PUSCH and that is before an n^{th} part of the first resource in one CG period; or an offset between a sending moment of the first indication information and a 1^{st} symbol that is for sending a PUSCH and that is before an n^{th} part of the first resource in one CG period is a preset offset, where N≥2, and N≥n≥1.

The terminal device may send the first indication information to the access network device for a plurality of times in one CG period, to reschedule, as early as possible, the first resource not used by the terminal device to another terminal device for use.

For example, an example in which the sending moment of the first indication information is a 1^{st} symbol that is for sending a PUSCH and that is before an n^{th} part of the first resource in one CG period is used. In one CG period, the terminal device may report a 1^{st} piece of first indication information on a 1^{st} symbol for sending a PUSCH, to indicate the 1^{st} part of the first resource in the first resource. There may be one or more resources in the 1^{st} part of the first resource, and an end moment of the 1^{st} part of the first resource may be greater than the first threshold. The terminal device may continue to use a 1^{st} resource after the 1^{st} part of the first resource to transmit service data of the terminal device, and may include a 2^{nd} piece of first indication information in the PUSCH, to indicate a 2^{nd} part of the first resource in the first resource. The rest can be deduced by analogy, until all resources are either used by the terminal device, or indicated by the terminal device by using the first indication information as unused.

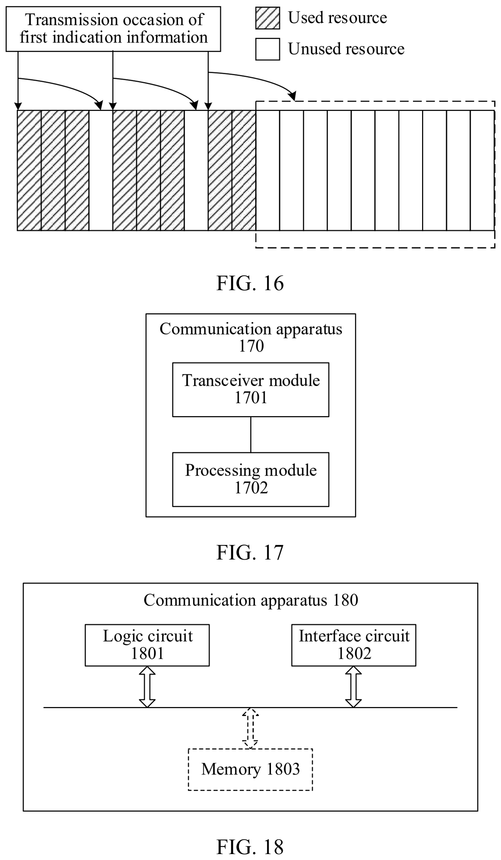

For example, as shown in FIG. 16, an example in which the second resource configured by the access network device for the terminal device includes 20 resources is used. It is assumed that resources used by the terminal device are a 1^{st}, a 2^{nd}, a 3^{rd}, a 5^{th}, a 6^{th}, a 7^{th}, a 9^{th}, and a 10^{th} resources, and a first resource not used by the terminal device includes a 4^{th}, an 8^{th}, and an 11^{th} to a 20^{th} resources. In this case, the first resource may include three parts, and the terminal device may send the first indication information to the access network device for three times. The terminal device may send, to the access network device on a 1^{st} symbol, the first indication information indicating a 1^{st} part of the first resource (namely, the 4^{th} resource), send, to the access network device on a 5^{th} symbol, the first indication information indicating a 2^{nd} part of the first resource (namely, the 8^{th} resource), and send, to the access network device on a 9^{th} symbol, the first indication information indicating a 3^{rd} part of the first resource (namely, the 11^{th} to the 20^{th} resources).

For descriptions about a case in which the offset between the sending moment of the first indication information and the 1^{st} symbol that is for sending the PUSCH and that is before the n^{th} part of the first resource in one CG period is the preset offset, refer to related descriptions about a case in which the sending moment of the first indication information is the 1^{st} symbol that is for sending the PUSCH and that is before the n^{th} part of the first resource in one CG period. Details are not described again.

Based on the foregoing descriptions, the terminal device may send the first indication information at different positions, so that resource configuration is more flexible. Different configuration manners may be used in different requirement scenarios. For example, in a scenario with a high latency requirement, the first indication information may be sent for a plurality of times.

It should be noted that the methods provided in embodiments of this application may be implemented separately, or may be implemented in combination. This is not limited.

It may be understood that, in embodiments of this application, an execution body may perform some or all of the steps in embodiments of this application. The steps or operations are merely examples. In embodiments of this application, other operations or variations of various operations may be further performed. In addition, the steps may be performed in different sequences presented in embodiments of this application, and not all the operations in embodiments of this application may need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

When each functional module is obtained through division based on each corresponding function, FIG. 17 shows a communication apparatus 170. The communication apparatus 170 may perform actions performed by the terminal device in FIG. 12 to FIG. 16, or perform actions performed by the access network device in FIG. 12 to FIG. 16.

The communication apparatus 170 may include a transceiver module 1701 and a processing module 1702. For example, the communication apparatus 170 may be a communication device, or may be a chip used in the communication device, or another combined device or part that has a function of the foregoing communication apparatus. When the communication apparatus 170 is the communication device, the transceiver module 1701 may be a transceiver, where the transceiver may include an antenna, a radio frequency circuit, and the like; and the processing module 1702 may be a processor (or a processing circuit), for example, a baseband processor, where the baseband processor may include one or more CPUs. When the communication apparatus 170 is the part that has the function of the communication apparatus, the transceiver module 1701 may be a radio frequency unit; and the processing module 1702 may be a processor (or a processing circuit), for example, a baseband processor. When the communication apparatus 170 is a chip system, the transceiver module 1701 may be an input/output interface of a chip (for example, a baseband chip); and the processing module 1702 may be a processor (or a processing circuit) of the chip system, and may include one or more central processing units. It should be understood that the transceiver module 1701 in this embodiment of this application may be implemented by a transceiver or a transceiver-related circuit component, and the processing module 1702 may be implemented by a processor or a processor-related circuit component (or referred to as a processing circuit).

For example, the transceiver module 1701 may be configured to perform all receiving and sending operations performed by the communication apparatus in the embodiments shown in FIG. 12 to FIG. 16, and/or configured to support another process of the technology described in this specification; and the processing module 1702 may be configured to perform all operations other than the receiving and sending operations performed by the communication apparatus in the embodiments shown in FIG. 12 to FIG. 16, and/or configured to support another process of the technology described in this specification.

In another implementation, the transceiver module 1701 in FIG. 17 may be replaced with a transceiver, where a function of the transceiver module 1701 may be integrated into the transceiver; and the processing module 1702 may be replaced with a processor, where a function of the processing module 1702 may be integrated into the processor.

Further, the communication apparatus 170 shown in FIG. 17 may further include a memory.

Alternatively, when the processing module 1702 is replaced with the processor, and the transceiver module 1701 is replaced with the transceiver, the communication apparatus 170 in this embodiment of this application may be a communication apparatus 180 shown in FIG. 18. The processor may be a logic circuit 1801, and the transceiver may be an interface circuit 1802. Further, the communication apparatus 180 shown in FIG. 18 may further include a memory 1803.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk drive or memory of the terminal. The computer-readable storage medium may alternatively be an external storage device of the foregoing terminal, for example, a plug-in hard disk drive, a smart media card (smart media card, SMC), a secure digital (secure digital, SD) card, or a flash card (flash card) that is configured on the terminal. Further, the computer-readable storage medium may further include both an internal storage unit and an external storage device of the foregoing terminal. The computer-readable storage medium is configured to store the computer program and other programs and data needed by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" refers to two or more than two. "At least two (items)" means two, three, or more. "And/or" describes an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c, or at least one of a, b, and c may represent: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is required during implementation, and do not mean any other limitation either.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to clearly understand that, for the purpose of convenient and brief description, division of the foregoing functional modules is taken as an example for illustration. During actual application, the foregoing functions may be allocated to different functional modules for implementation based on a need. That is, an inner structure of an apparatus is divided into different functional modules, to implement all or some of the functions described above.

In the several embodiments provided in this application, it should be understood that the disclosed apparatuses and methods may be implemented in other manners. For example, the described apparatus embodiments are merely examples. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual need, to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk drive, a ROM, a RAM, a magnetic disk, or an optical disc.

## Claims

1. A communication method, wherein the method is applied to an extended reality XR service, and the method comprises:
sending first indication information to an access network device, wherein the first indication information indicates a first resource not used by a terminal device, the first resource is a part or all of a second resource, and the second resource is a resource configured by the access network device for the terminal device;
receiving second indication information from the access network device, wherein the second indication information indicates that the access network device reschedules a part or all of the first resource, or the second indication information indicates that the access network device does not reschedule a part or reschedules none of the first resource; and
sending data to the access network device by using a third resource, wherein the third resource is related to the part or all of the first resource indicated by the second indication information, and the third resource is a part or all of the second resource.

2. The method according to claim 1, wherein
the second indication information indicates that the access network device reschedules all of the first resource, and the third resource is a resource that is in the second resource and that is other than the first resource; or
the second indication information indicates that the access network device reschedules the part of the first resource, and the third resource is a resource that is in the second resource and that is other than the part of the first resource rescheduled by the access network device; or
the second indication information indicates that the access network device reschedules none of the first resource, and the third resource is the second resource; or
the second indication information indicates that the access network device does not reschedule the part of the first resource, and the third resource is a resource that is in the second resource and that is other than a part of the first resource rescheduled by the access network device.

3. The method according to claim 1 or 2, wherein
the second indication information indicates that the access network device reschedules the part of the first resource, and the terminal device updates a modulation and coding scheme MCS, and remaps the third resource according to an updated MCS; or
the second indication information indicates that the access network device does not reschedule the part or reschedules none of the first resource, and the terminal device updates an MCS, and remaps the third resource according to an updated MCS.

4. The method according to any one of claims 1 to 3, wherein before sending the data to the access network device by using the third resource, the method further comprises:
receiving third indication information from the access network device, wherein the third indication information indicates the terminal device to update the MCS, or the third indication information indicates the terminal device not to update the MCS; or
determining, based on the second indication information, to update or not to update the MCS.

5. The method according to claim 3 or 4, wherein
a value of the updated MCS is related to a quantity of resources comprised in the third resource.

6. The method according to any one of claims 1 to 5, wherein sending the first indication information to the access network device comprises:
if an end moment of the first resource is after a first moment, sending the first indication information to the access network device, wherein the end moment of the first resource is greater than a first threshold, and
a value of the first threshold is S or N, wherein a value of S is any one of the following, and a value of N is a sum of a plurality of the following:
from end time of sending the first indication information by the terminal device to end time of obtaining the first indication information by the access network device through decoding; or
from end time of obtaining the first indication information by the access network device through decoding to end time of sending the second indication information by the access network device; or
from end time of sending the second indication information by the access network device to end time of receiving the second indication information by the terminal device; or
from end time of receiving the second indication information by the terminal device to end time of sending the data by the terminal device; or
from end time of sending downlink control information by the access network device to another terminal device to end time of sending data by the another terminal device.

7. The method according to claim 6, wherein
fourth indication information is received from the access network device, wherein the fourth indication information indicates the first threshold.

8. The method according to any one of claims 1 to 7, wherein
the first resource is a consecutive resource, and the first indication information is sent to the access network device once in one CG period, wherein
a sending moment of the first indication information is a 1^{st} symbol for sending a PUSCH in one CG period; or an offset between a sending moment of the first indication information and a 1^{st} symbol for sending a PUSCH in one CG period is a preset offset.

9. The method according to any one of claims 1 to 7, wherein
the first resource is a discrete resource, and the first indication information is sent to the access network device once in one CG period, wherein
a sending moment of the first indication information is a 1^{st} symbol for sending a PUSCH in one CG period; or an offset between a sending moment of the first indication information and a 1^{st} symbol for sending a PUSCH in one CG period is a preset offset.

10. The method according to any one of claims 1 to 7, wherein
the first resource is a discrete resource, and the first indication information is sent to the access network device for a plurality of times in one CG period, wherein
the first resource comprises N parts, and a sending moment of the first indication information is a 1^{st} symbol that is for sending a PUSCH and that is before an n^{th} part of the first resource in one CG period; or an offset between a sending moment of the first indication information and a 1^{st} symbol that is for sending a PUSCH and that is before an n^{th} part of the first resource in one CG period is a preset offset, wherein N≥2, and N≥n≥1.

11. The method according to any one of claims 1 to 10, wherein
fifth indication information is sent to another terminal device, wherein the fifth indication information indicates one or more of the another terminal device to perform data transmission by using the first resource.

12. A communication method, wherein the method is applied to an extended reality XR service, and the method comprises:
receiving first indication information from a terminal device, wherein the first indication information indicates a first resource not used by the terminal device, the first resource is a part or all of a second resource, and the second resource is a resource configured by an access network device for the terminal device;
sending second indication information to the terminal device, wherein the second indication information indicates that the access network device reschedules a part or all of the first resource, or the second indication information indicates that the access network device does not reschedule a part or reschedules none of the first resource; and
receiving data from the terminal device by using a third resource, wherein the third resource is related to the part or all of the first resource indicated by the second indication information, and the third resource is a part or all of the second resource.

13. The method according to claim 12, wherein
the second indication information indicates that the access network device reschedules all of the first resource, and the third resource is a resource that is in the second resource and that is other than the first resource; or
the second indication information indicates that the access network device reschedules the part of the first resource, and the third resource is a resource that is in the second resource and that is other than the part of the first resource rescheduled by the access network device; or
the second indication information indicates that the access network device reschedules none of the first resource, and the third resource is the second resource; or
the second indication information indicates that the access network device does not reschedule the part of the first resource, and the third resource is a resource that is in the second resource and that is other than a part of the first resource rescheduled by the access network device.

14. The method according to claim 12 or 13, wherein before receiving the data from the terminal device by using the third resource, the method further comprises:
sending third indication information to the terminal device, wherein the third indication information indicates the terminal device to update a modulation and coding scheme MCS, or the third indication information indicates the terminal device not to update an MCS.

15. The method according to claim 14, wherein
a value of an updated MCS is related to a quantity of resources comprised in the third resource.

16. The method according to any one of claims 12 to 15, wherein
fourth indication information is sent to the terminal device, wherein the fourth indication information indicates a first threshold, and
a value of the first threshold is S or N, wherein a value of S is any one of the following, and a value of N is a sum of a plurality of the following:
from end time of sending the first indication information by the terminal device to end time of obtaining the first indication information by the access network device through decoding; or
from end time of obtaining the first indication information by the access network device through decoding to end time of sending the second indication information by the access network device; or
from end time of sending the second indication information by the access network device to end time of receiving the second indication information by the terminal device; or
from end time of receiving the second indication information by the terminal device to end time of sending the data by the terminal device; or
from end time of sending downlink control information by the access network device to another terminal device to end time of sending data by the another terminal device.

17. The method according to any one of claims 12 to 16, wherein
the first resource is a consecutive resource, and the first indication information is received from the terminal device once in one CG period, wherein
a sending moment of the first indication information is a 1^{st} symbol for sending a PUSCH in one CG period; or an offset between a sending moment of the first indication information and a 1^{st} symbol for sending a PUSCH in one CG period is a preset offset.

18. The method according to any one of claims 12 to 16, wherein
the first resource is a discrete resource, and the first indication information is received from the terminal device once in one CG period, wherein
a sending moment of the first indication information is a 1^{st} symbol for sending a PUSCH in one CG period; or an offset between a sending moment of the first indication information and a 1^{st} symbol for sending a PUSCH in one CG period is a preset offset.

19. The method according to any one of claims 12 to 16, wherein
the first resource is a discrete resource, and the first indication information is received from the terminal device for a plurality of times in one CG period, wherein
the first resource comprises N parts, and a sending moment of the first indication information is a 1^{st} symbol that is for sending a PUSCH and that is before an n^{th} part of the first resource in one CG period; or an offset between a sending moment of the first indication information and a 1^{st} symbol that is for sending a PUSCH and that is before an n^{th} part of the first resource in one CG period is a preset offset, wherein N≥2, and N≥n≥1.

20. A communication apparatus, wherein the communication apparatus comprises a processor, and the processor is configured to run a computer program or instructions, to enable the communication apparatus to perform the communication method according to any one of claims 1 to 11, or perform the communication method according to any one of claims 12 to 19.

21. A computer-readable storage medium, wherein the computer-readable storage medium stores computer instructions or a program, and when the computer instructions or the program is run on a computer, the communication method according to any one of claims 1 to 11 is performed, or the communication method according to any one of claims 12 to 19 is performed.

22. A computer program product, wherein the computer program product comprises computer instructions, and when a part or all of the computer instructions are run on a computer, the communication method according to any one of claims 1 to 11 is performed, or the communication method according to any one of claims 12 to 19 is performed.

23. A communication apparatus, comprising a module configured to perform the method according to any one of claims 1 to 11 or claims 12 to 19.
